# EUROPÄISCHE PATENTANMELDUNG

(11) **EP 1 843 576 A2**
(43) Veröffentlichungstag der Anmeldung: **10.10.2007**
(21) Anmeldenummer: 07006619.6
(22) Anmeldetag: 30.03.2007
(51) Int. Cl.: H04N 5/44, H04N 5/00, H04N 5/775

(54) **Schnittstelle für Geräte der Unterhaltungselektronik**

(30) Priorität: 04.04.2006 DE 10616070; 21.06.2006 DE 10628456
(71) Anmelder: Grundig Multimedia B.V., ZX 1077 Amsterdam (NL)
(72) Erfinder: Haake, Werner, 90530 Wendelstein (DE); Menger, Karl-Heinz, 90562 Heroldsberg (DE); Janssen, Horst, 90584 Allersberg (DE); Roth, Hubert, 90765 Fürth (DE)
(74) Vertreter: Pröll, Jürgen

(57) **Zusammenfassung**

Die vorliegende Erfindung betrifft eine Schnittstelle in einem Gerät der Unterhaltungselektronik (TV, P1), welche extern zugänglich am Gerät der Unterhaltungselektronik (TV, P1) angeordnet ist. Über die Schnittstellen(I1, I2t ein Gerät der Unterhaltungselektronik (TV) mit mindestens einem weiteren Gerät der Unterhaltungselektronik (P1) zusammenschaltbar wobei unmittelbar nach der Zusammenschaltung der Geräte der Unterhaltungselektronik (TV, P1) ein Handshake zwischen den zusammengeschalteten Geräten der Unterhaltungselektronik (TV, P1) erfolgt und ein Austausch von Befehlssätzender zusammengeschalteten Geräte der Unterhaltungselektronik (TV, P1) vorgenommen wird. Die zusammengeschalteten Geräte der Unterhaltungselektronik (TV, P1) verwenden einen Befehlssatz für die Kommunikation untereinander, welcher bei allen zusammengeschalteten Geräten der Unterhaltungselektronik (TV, P1) vorhanden ist.

## Beschreibung

Die vorliegende Erfindung betrifft eine Schnittstelle, über welche Geräte der Unterhaltungselektronik, vorzugsweise ein TV-Gerät und ein Peripherie-Gerät, miteinander verbindbar sind.

Derartige Schnittstellen sind bekannt, so ist beispielsweise die AV-Link-Schnittstelle, welche beispielsweise bei der Firma Grundig mit Megalogic bezeichnet ist, hinlänglich bekannt. Über diese Schnittstelle wird es ermöglicht, die einzelnen Programmbelegungsplätze von zwei über diese Schnittstelle gekoppelten Geräten abzugleichen und die Sender in beiden Geräten auf identische Programmplätze zu speichern.

Die bisherigen Schnittstellen und Verfahren ermöglichen es aber nicht, dass zwei Geräte der Unterhaltungselektronik, welche über eine Schnittstelle gekoppelt werden, gemeinsam ihre Funktionalitäten über diese Schnittstelle steuern.

Aufgabe der Erfindung ist es, ein Verfahren zum Betrieb einer Schnittstelle und ein entsprechendes System mit dieser Schnittstelle aufzuzeigen, wobei die Geräte der Unterhaltungselektronik, welche über die Schnittstelle gekoppelt sind, über und mit Hilfe dieser Schnittstelle steuerbar sind.

Diese Aufgabe wird anhand der Merkmale der Ansprüche 1 und 12 gelöst. Vorteilhafte Ausgestaltungen der Erfindung ergeben sich anhand der weiteren Beschreibung, der abhängigen Ansprüche, sowie der zugehörigen Figuren.

Die erfindungsgemäße Schnittstelle, welche mit einer entsprechenden Software hinterlegt ist, ist an einem Gerät der Unterhaltungselektronik angeordnet und extern zugänglich. Bei den Geräten der Unterhaltungselektronik handelt es sich beispielsweise um ein TV-Gerät und ein Peripherie-Gerät, wobei es sich bei dem Peripherie-Gerät zum Beispiel um eine DVB-T-Empfangsbox, einen DVB-Satellitenempfänger, einen DVB-Kabel-Empfänger oder ein DVD-Wiedergabe/Aufzeichungsgerät (DVD-Recorder) handelt.

Die Erfindung wird anhand eines TV-Gerätes und eines Peripherie-Gerätes beschrieben. Diese Darstellung vereinfacht das Verständnis. Es erfolgt aber keine Limitierung der Erfindung auf diese beschriebene Form.

Die erfindungsgemäße Schnittstelle ist sowohl am TV-Gerät als auch am Peripherie-Gerät vorhanden. Die Schnittstelle ist aber derart mechanisch ausgestaltet, dass das Peripherie-Gerät mit seiner Schnittstelle form- und kraftschlüssig in die Schnittstelle des TV-Gerätes eingefügt werden kann.

In einer vorzugsweisen Ausgestaltung der Erfindung ist die Schnittstelle am TV-Gerät derartig ausgestaltet, dass diese mit der Schnittstelle am Peripherie-Gerät direkt koppelbar ist, d.h. das Peripherie-Gerät mit seiner Schnittstelle ist direkt in die Schnittstelle am TV-Gerät einführbar. Somit kann das Peripherie-Gerät in das TV-Gerät quasi hineingesteckt werden. Vorteilhaft hierbei ist, dass das Peripherie-Gerät dann keinen eigenen Platz zur Aufstellung benötigt. Außerdem kann auf diese Weise die Funktionalität des TV-Gerätes erweitert werden, indem das Peripherie-Gerät in das TV-Gerät über die Schnittstelle integriert wird. Es sind dann keine Kabel oder sonstige Anschlüsse vorhanden. Das Peripherie-Gerät wird über die Schnittstelle mit Energie vom TV-Gerät versorgt. In diesem Fall muss dann das Peripherie-Gerät nicht gesondert abgeschaltet werden, denn wenn das TV-Gerät stromlos geschaltet wird, ist automatisch das Peripherie-Gerät stromlos geschaltet.

In einer weiteren Ausführungsform sind die Schnittstellen am TV-Gerät und am Peripherie-Gerät mit einem Verbindungskabel zu verbinden. In vorzugsweiser Ausführung ist diese Schnittstelle als RS 232-Schnittstelle ausgelegt.
Die Schnittstelle dient zur bidirektionalen Kommunikation beider Geräte untereinander. Eine weitere Ausführungsform ist eine optische Verbindung, welche insbesondere für Daten-, Bild- und Tonübertragung eine hohe Bandbreite bereitstellt.

Diese Verbindung ist ebenfalls vorzugsweise bidirektional ausgestaltet.

Die Schnittstelle ist in der Art ausgelegt und mit einer Software hinterlegt, dass, sobald Geräte über die Schnittstelle gekoppelt sind, Softwareprotokolle zwischen den Geräten mit Handshake ausgetauscht werden. Anschließend ist es möglich, dass das eine Gerät das andere Gerät über diese Schnittstelle steuert.

Vorzugsweise ist vorgesehen, dass eines der Geräte als Master und das zweite Gerät als Slave definiert werden. Die Befehle zur Steuerung der Geräte müssen dann nur über eine Eingabeeinheit eines der über die Schnittstelle zusammengeschalteten Geräte erfolgen. Dieses Gerät, dem die Eingabeeinheit zugeordnet ist, führt den Eingabebefehl dann selbst aus oder, wenn es hierzu nicht in der Lage ist, leitet es diesen Befehl an das andere Gerät weiter.
Vorteilhaft ist, dass bei der Zusammenschaltung über die Schnittstelle eine Erkennunsprozedur gestartet wird, so dass sich die gekoppelten Geräte selbsttätig erkennen.

Vorzugsweise ist auch vorgesehen, dass - wenn es sich um kleinere Peripherie-Geräte handelt - diese mit Energie über die Schnittstelle aus dem TV-Gerät versorgt werden.

In Abhängigkeit der Kennung der Geräte, das heißt in Abhängigkeit der Funktion der Geräte, wobei beide Gerät die Protokolle untereinander austauschen und somit erkennen, über welche Funktion das andere Gerät verfügt, wird die Funktion und das Verhalten der angeschlossenen Geräte gesteuert; vorzugsweise ändert das TV-Gerät seine internen Prozesse und deren Darstellung nach außen. Es konvertiert die empfangenen Befehle, welche beispielsweise vom Peripherie-Gerät bzw. vom Eingabe-Gerät, der Fernbedienung oder dem Bedientasten-Gerät vom User vorgenommen werden und leitet diese konvertierten Befehle entsprechend weiter oder führt sie aus.

Hat das TV-Gerät beispielsweise keinen internen DVB-T-Empfänger und handelt es sich beim Peripherie-Gerät um einen DVB-T-Empfänger, wird über die Schnittstelle das Peripherie-Gerät gesteuert, als ob es sich um einen in das TV-Gerät integrierten DVB-T-Empfänger handelt. Handelt es sich beispielsweise um Befehle, wie eine Programmumschaltung, und wird diese Programmumschaltung vom angeschlossenen Peripherie-Gerät ausgeführt, so konvertiert das TV-Gerät Eingaben vom Benutzer und leitet diese an das angeschlossene Peripherie-Gerät. Das nimmt dann die Umschaltung vor. Zugleich leitet das Peripherie-Gerät die empfangenen Signale an das TV-Gerät, welches diese darstellt und/oder aufbereitet, wie etwa EPG-Daten.

Das TV-Gerät leitet sozusagen die konvertierten oder erzeugten Befehle zum Peripherie-Gerät. Das TV-Gerät erhält Rückmeldungen über den Status und die Aktivität des Peripherie-Gerätes und dessen Daten.

Die zusätzliche Funktionalität der Peripherie-Geräte ist vorteilhaft für den Nutzer als Funktionsanzeige und Auswahl in das On-Screen-Display des TV-Gerätes integriert. Es steht damit einem Nutzer eine einheitliche und komfortable Benutzeroberfläche zur Verfügung.

Im On-Screen-Display des TV-Gerätes sind hierfür Menü-Punkte freigehalten, welche dann von der Funktion des bzw. der Peripherie-Geräte belegt wird.

Im Weiteren ändert sich dynamisch anhand des angeschlossenen/der angeschlossenen Geräte der Funktionsumfang der Gesamtkonfiguration.
Bei der Grundinitialisierung besteht die Möglichkeit, ein Skript auszutauschen, mit dessen Hilfe Menüs und Kommandos definiert werden und auf dem TV-Gerät zur Ausführung kommen können.

Ein an das TV-Gerät angeschlossenes Peripherie-Gerät stellt sich für den Benutzer zusammen mit dem TV-Gerät wie ein einheitliches einziges Gerät dar. Auf diese Weise ist es möglich, an das TV-Gerät Peripherie-Geräte anzuschließen und der Nutzer kann diese Peripherie-Geräte über das TV-Gerät mit bedienen. Gleichwohl kann aber auch das TV-Gerät über die Eingabeeinheit für das Peripherie-Gerät gesteuert werden; dies ist dann als besonders vorteilhaft anzusehen, wenn der Funktionsumfang des Peripherie-Gerätes groß ist. Außerdem ist dieses Vorgehen sinnvoll, wenn das Peripherie-Gerät nicht vom TV-Gerät ausschaltbar ist.

Im Weiteren wird die Funktionalität anhand eines konkreten Ausführungsbeispieles beschrieben.

Es zeigen:
- FIG. 1: einen schematischen Aufbau der Erfindung;
- FIG. 2: den elektrischen Aufbau der Schnittstelle integriert in ein Gerät.

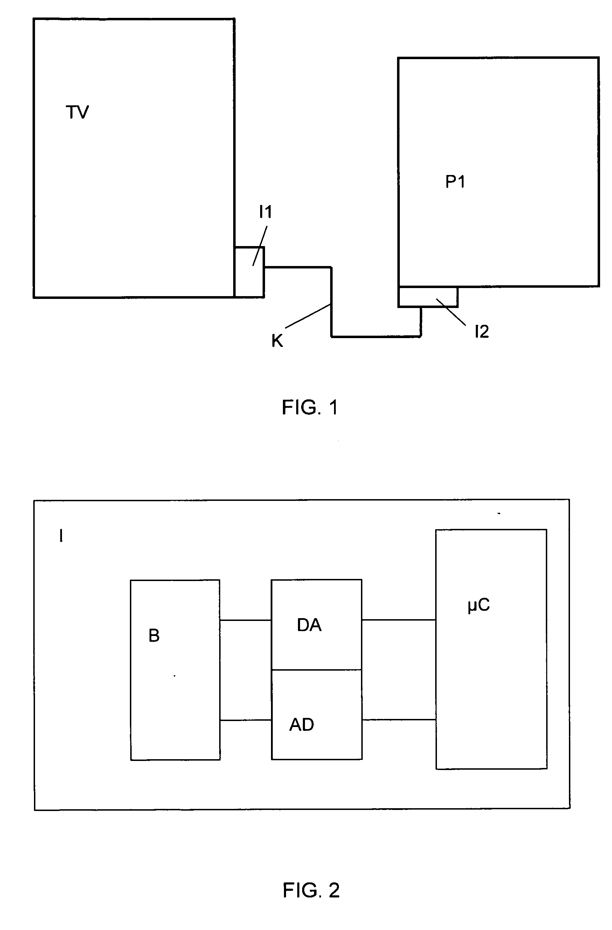

Das konkrete Ausführungsbeispiel ist schematisch in Figur 1 aufgezeigt und zeigt ein TV-Gerät TV mit einer Schnittstelle l1. Über diese Schnittstelle l1 ist mittels eines Verbindungskabels K ein Peripherie-Gerät P1, z. B. ein Sat-Empfänger für Satellitenrundfunkprogrammsignale, über dessen Schnittstelle l2 angeschlossen.
In einer weiteren Ausgestaltung der Erfindung ist die Schnittstelle l1 derart auf die Schnittstelle l2 mechanisch abgestimmt, dass die Schnittstelle l2 in die Schnittstelle 11 eingeschoben werden kann und dass eine formschlüssige und kraftschlüssige mechanische Verbindung hergestellt wird, welche aber zerstörungsfrei wieder lösbar ist.

Sobald über die Schnittstellen I1 und I2 eine Verbindung zwischen dem TV-Gerät TV und dem Peripherie-Gerät P1 hergestellt ist, erkennen dies die Schnittstelle 11 und die Schnittstelle I2 und geben diese Information an die jeweiligen Steuereinheiten der beiden zusammengeschlossenen Geräte weiter. Hierzu ist in der Schnittstelle ein Softwareprotokoll hinterlegt, welches bei einer Aktivierung der Schnittstelle automatisch startet. Es wird dann in jedem der Geräte TV und P1 eine Softwareroutine gestartet. Es wird ein Handshake vorgenommen und der Datenaustausch zwischen beiden Geräten TV, P1 vorgenommen.

Eines der Geräte, im vorliegenden Fall das TV-Gerät TV, wird als Master initiiert und übernimmt den Protokollverkehr. Es besteht aber auch die Möglichkeit, dass das andere Gerät hierzu verwendet wird.

Zunächst werden die Befehlssätze beider Geräte TV und P1 ausgetauscht sowie die Version der im Gerät jeweils vorhandenen Software. Anhand dieser Daten wird ein gemeinsamer Befehlssatz festgelegt und jeweils ein weiterer Befehlssatz mit den Befehlen, welche nur von einem Gerät ausführbar sind. In vorzugsweiser Ausgestaltung der Erfindung wird dasjenige Gerät TV, P1 als Master gesetzt, das den neueren Softwarestand für die Schnittstelle oder den größten Umfang an Befehlen bzw. Befehlssätzen aufweist, oder das Gerät, welches mit einer Bilddarstellungseinheit, einem Display, ausgestattet ist. Dies ist dann zumeist das Gerät, dessen Eingabeeinheit von einem Nutzer zur Eingabe von Befehlen verwendet wird.

Anschließend wird ein gemeinsamer Befehlsatz vergeben, wobei beide Geräte TV, P1 ihre Befehlssätze bereitstellen.

Der Vorzug der Erfindung ist, dass Eingaben eines Nutzers an die beiden über die Schnittstellen I1, I2 gekoppelten Geräte TV, P1 über nur eine Eingabeeinheit, insbesondere eine Fernbedienung, an eines der Geräte TV, P1 gegeben werden muss und die beiden Geräte TV, P1 diesen Befehl ausführen, quasi als ob sie ein einheitliches Gerät wären. Dies hat für einen Nutzer den Vorteil, dass er sich nicht an mehrere Eingabeeinheiten gewöhnen muss, er kann vielmehr nur mit einer Eingabeeinheit die Gerätekombination TV, P1 steuern.

Um eine eindeutige Kommunikation und Zuweisung zu ermöglichen, werden bei Benutzereingaben nur noch diejenigen Befehle berücksichtigt, welche für beide Geräte gemeinsam ausführbar sind.

Hierzu ist ein gemeinsames Protokoll vorhanden, das beispielhaft im Weiteren näher beschrieben wird:

Die einfachste Art der Kommunikation ist die unidirektionale, die im Folgenden mit einer Möglichkeit dargestellt wird. Es ist aber auch eine bidirektionale Kommunikation durchführbar damit, unabhängig vom jeweiligen Erscheinungsbild der TV-Oberfläche eine sichtbare logische Integration vorhanden ist. So kann z.B. eine Information über das aktuell empfangene und dargestellte Programm und eine Information über die nachfolgende Sendung auf der Anzeigeeinheit des TV-Gerätes TV dargestellt werden. Außerdem kann über die Eingabeeinheit das von der Quelle bereitgestellte Sprachsignal, d.h. der Sprachsignalkanal gewählt werden, es kann aber auch ein möglicher Blickwinkel eingestellt werden. Eine Kumulation der EPGs verschiedener Provider und deren Darstellung auf der Anzeigevorrichtung des TV-Gerätes wäre ebenfalls möglich.

Im Falle der unidirektionalen Kommunikation über die Schnittstellen I1, I2 wird vom Mastergerät, im vorliegenden Fall vom TV-Gerät TV derjenige Befehl an das Peripherie-Gerät P1 weitergeleitet, den das TV-Gerät TV, eben der Master, nicht selbst ausführen kann. Dies wäre beispielsweise der Kanalwechsel beim Peripherie-Gerät P1. Es wird faktisch der Code des Befehles, der ausgeführt werden soll, weitergeleitet, soweit das TV-Gerät TV diesen Befehl nicht selbst vornehmen kann. Die Weiterleitung erfolgt in Form eines Telegramms. Das Telegramm besteht immer aus zwei Byte. Das erste Byte ist immer fest und legt den Typ, die Richtung und die Unidirektionalität fest.

Das zweite Byte beinhaltet die Steuerbefehle, wie beispielsweise:

| Key | Code | Hex |
|---|---|---|
| 0 | '0' | 0x30 |
| 1 | '1' | 0x31 |
| 2 | '2' | 0x32 |
| 3 | '3' | 0x33 |
| 4 | '4' | 0x34 |
| 5 | '5' | 0x35 |
| 6 | '6' | 0x36 |
| 7 | '7' | 0x37 |
| 8 | '8' | 0x38 |
| 9 | '9' | 0x39 |
| 1 (Menu) | 'I' | 0x49 |
| Z (Zapp) | 'Z' | 0x5A |
| TXT | 'T' | 0x54 |
| TV-G | 'E' | 0x45 |
| Red | 'R' | 0x52 |
| Green | 'G' | 0x47 |
| Yellow | 'Y' | 0x59 |
| Blue | 'B' | 0x42 |
| PIP | 'P' | 0x50 |
| Format | 'F' | 0x46 |
| ? | 'H' | 0x48 |
| Mute | 'M' | 0x4D |
| Stand by | ' ' | 0x20 |
| OK | '0' | 0x4F |
| P+(up) | 'U' | 0x55 |
| P- (down) | 'D' | 0x44 |
| Left | '<' | 0x3C |
| Right | '>' | 0x3E |
| SCAN | 's' | 0x73 |
| S | 'S' | 0x53 |
| P | 'p' | 0x70 |
| PAT | 'A' | 0x41 |
| AV | 'V' | 0x56 |

Beabsichtigt beispielsweise der Benutzer die Lautstärke zu verändern, so kann diese im TV-Gerät TV oder aber im Peripheriegerät P1 verändert werden, indem dort der entsprechende Pegel angehoben wird. Vorzugsweise wird über die Schnittstelle I1, I2 dasjenige Gerät ausgewählt, welches die größere Dynamik bietet. So kann beispielsweise das TV-Gerät TV selbst die Lautstärke anheben oder aber diesen unidirektionalen Befehl an das Peripherie-Gerät P1 leiten, welches dann seinerseits die Lautstärke erhöht.

Im Weiteren wird jedoch vorgesehen, dass zur optimalen Ausnutzung der Dynamik der Geräte TV, P1, vorzugsweise das Peripherie-Gerät P1 maximal ausgesteuert wird und die Anpassung der Ausgabe im TV-Gerät TV erfolgt.

Zur bidirektionalen Kommunikation wird beispielhaft folgender Code verwendet:

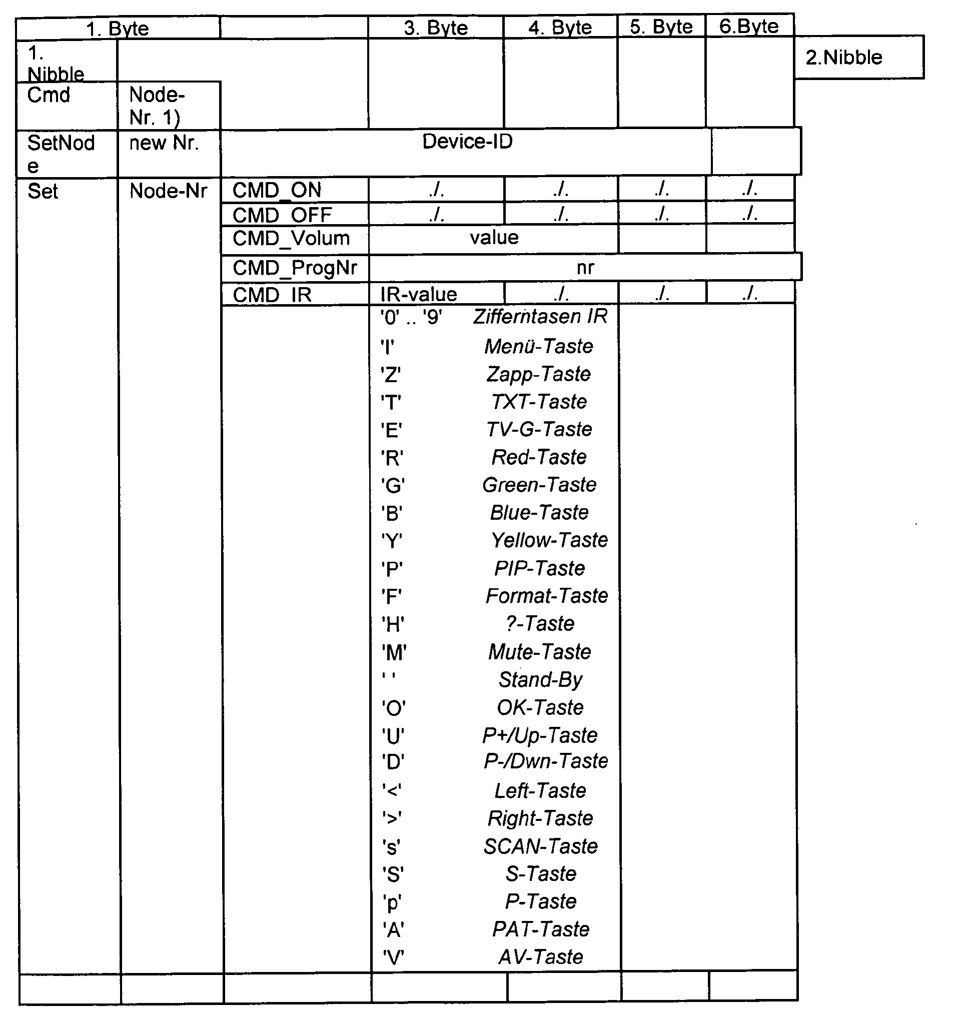

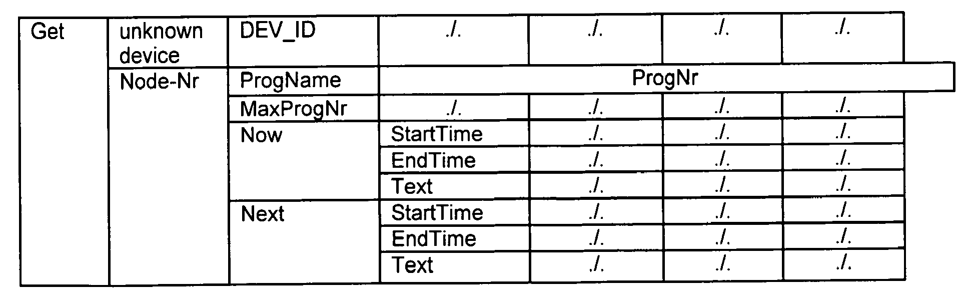

Die Node-Nr. ist im vorliegenden Fall auf maximal vierzehn beschränkt. Wird Value auf eins gesetzt sind alle Nodes aktiv. Bei Value fünfzehn wird gemeldet, dass es sich um ein unbekanntes Gerät handelt.

Im Weiteren ist vorgesehen, dass, wenn es sich beispielsweise bei dem Peripherie-Gerät P1 um ein kleineres Gerät oder um ein Gerät handelt, welches in vorzugsweiser Ausgestaltung der Erfindung direkt in die Schnittstelle I1 des TV-Gerätes TV eingesteckt wird, beispielsweise eine DVB-T-Empfangsbox, diese mit Energie/Strom aus dem TV-Gerät TV über die Schnittstelle I1 versorgt wird. Im Übrigen verhält sich dann dieses Gerät wie beschrieben.

Soll nunmehr ein Programmwechsel vorgenommen werden, so kann der Benutzer dies über das Eingabegerät (Eingabeeinheit) am TV-Gerät TV bzw. dessen zugehöriger Bedieneinheit vornehmen. In vorzugsweiser Ausgestaltung der Erfindung handelt es sich um eine Fernbedienung.

Der Nutzer gibt über die Eingabeeinheit bzw. Bedieneinheit beispielsweise den Programmwechsel ein. Dies wird vom TV-Gerät TV empfangen, der Befehl wird codiert, umgesetzt und über die Schnittstelle I1, I2 dem Peripherie-Gerät P1 zugeleitet. Das Peripherie-Gerät P1 nimmt dann den Kanalwechsel vor. Beide Geräte TV und P1 tauschen zugleich ihren Status aus, das TV-Gerät TV teilt mit, dass es empfangsbereit und in Betrieb ist, das Peripherie-Gerät P1 teilt gleiche Informationen mit.

In einer weiteren Ausgestaltung der Erfindung erkennen beide Geräte TV, P1 den jeweiligen Status, wie z.B. Bereitschaftsbetrieb und den Stand-by-Betrieb. Ist beispielsweise das TV-Gerät TV ausgeschaltet und das Peripherie-Gerät P1 angeschaltet und erfolgt über einen vorgegebenen Zeitraum keine Eingabe, so schaltet sich das Peripherie-Gerät P1 selbsttätig ab.

Wird das TV-Gerät TV abgeschaltet und befindet sich das angeschlossene Peripherie-Gerät P1 im eingeschalteten Zustand, so wird vom TV-Gerät TV an das Peripherie-Gerät P1 der Befehl zum Ausschalten gesendet.

Das Peripherie-Gerät P1 überwacht seine Schnittstelle I2 kontinuierlich. Sobald ein anderes Gerät an diese Schnittstelle gekoppelt wird, erkennt dies das Peripherie-Gerät P1, schaltet sich an und beginnt mit der eingangs beschriebenen Prozedur.

In einer weiteren Ausgestaltung ist es möglich, dass das Peripherie-Gerät das TV-Gerät aus dem Stand-by-Betrieb startet.

In einer anderen vorteilhaften Ausgestaltung der Erfindung erkennen beide Geräte TV, P1 den jeweiligen Status, wie z.B. Bereitschaftsbetrieb und den Stand-By-Betrieb. Ist beispielsweise das Peripherie-Gerät P1 ausgeschaltet und das TV-Gerät TV angeschaltet und erfolgt über einen vorgegebenen Zeitraum keine Eingabe, so schaltet sich das TV-Gerät TV selbsttätig ab.

Wird das Peripherie-Gerät P1 abgeschaltet und befindet sich das angeschlossene TV-Gerät TV in eingeschalteten Zustand, so wird vom Peripherie-Gerät P1 an das TV-Gerät TV der Befehl zum Ausschalten gesendet.

Das TV-Gerät TV überwacht seine Schnittstelle I1 kontinuierlich. Sobald ein anderes Gerät an diese Schnittstelle gekoppelt wird, erkennt dies das TV-Gerät TV schaltet sich an und beginnt mit der eingangs beschriebenen Prozedur.

In einer weiteren Ausgestaltung ist es möglich, dass das TV-Gerät TV das Peripherie-Gerät P1 aus dem Stand-by-Betrieb startet.

Im Weiteren ist vorgesehen, dass zwei verbundene Geräte TV, P1, welche bereits einmal verbunden waren, die Historie der Verbindung in einem Speicher speichern, um auf die gemeinsamen Daten dann zugreifen zu können. Auf diese Weise ist es möglich, bei einer späteren Verbindung dieser Geräte nicht mehr den Initiierungsprozess vornehmen zu müssen.

In FIG. 2 ist der schematische Aufbau der Schnittstelle I dargestellt. Diese besteht aus einem Buffer B, einem Analog-Digital-Wandler AD, einem Digital-AnalogWandler DA und einer Mikrocomputereinheit µC.

Über eine Taste der Bedieneinheit wird von der Steuerung des Hauptgerätes direkt auf die Steuerung des Peripherie-Gerätes geschalten. Es lassen sich so diverse Abläufe einstellen.

Durch die vorgenannte Erfindung ist es auch möglich, beispielsweise einen DVD-Recoder, der eine erfindungsgemäße Schnittstelle aufweist, über diese Schnittstelle mit einem DVB-T-Empfänger, der ebenfalls die Schnittstelle beinhaltet, zu verbinden und auf diese Weise einen DVD-Recoder mit einem Empfangsteil zum Empfang von Rundfunksignalen auszustatten.

## Patentansprüche

1. Verfahren zum Betrieb von Schnittstellen für Geräte der Unterhaltungselektronik, wobei über die Schnittstellen (I1, I2) mindestens ein erstes Gerät der Unterhaltungselektronik (TV) mit einem zweiten Gerät der Unterhaltungselektronik (P1) zusammengeschaltet wird und bei der Inbetriebnahme bzw. dem Anschluss von den Geräten der Unterhaltungselektronik (TV, P1) an die Schnittstellen (I1, I2) ein Handshake zwischen den zusammengeschalteten Geräten der Unterhaltungselektronik (TV, P1) vorgenommen wird und die Befehlssätze der zusammengeschalteten Geräte der Unterhaltungselektronik (TV, P1) untereinander ausgetauscht werden und aus diesen Befehlssätzen ein neuer Befehlssatz zusammengestellt wird, bei welchem Dubletten vermieden werden und jeder Funktion ein Gerät der Unterhaltungselektronik (TV, P1) zugeordnet wird, wobei Eingaben eines Benutzers über eine Bedieneinheit, welche einem der Geräte der Unterhaltungselektronik (TV, P1) zugeordnet ist, erfolgen, diese Eingaben empfangen, decodiert und entweder von diesem Gerät der Unterhaltungselektronik (TV, P1) ausgeführt oder an das andere Gerät der Unterhaltungselektronik (TV, P1) zu dessen Ausführung geleitet werden.

2. Verfahren nach Anspruch 1,
**dadurch gekennzeichnet, dass**
die über die Schnittstelle (I1, I2) zusammengeschalteten Geräte der Unterhaltungselektronik (TV, P1) kontinuierlich ihren Status untereinander austauschen.

3. Verfahren nach Anspruch 1 oder 2,
**dadurch gekennzeichnet, dass**
über die am ersten Gerät (TV) angeordnete Schnittstelle (I1) die Schnittstelle (I2) des zweiten Geräts der Unterhaltungselektronik (P1) eingefügt wird.

4. Verfahren nach einem oder mehreren der vorangehenden Ansprüche,
**dadurch gekennzeichnet, dass**
die Schnittstellen (11, I2) als RS 232-Schnittstellen oder als optische bidirektionale Verbindung ausgeführt werden.

5. Verfahren nach einem oder mehreren der vorangehenden Ansprüche,
**dadurch gekennzeichnet, dass**
ein Handshake mittels Softwareprotokollen vorgenommen wird und/oder die Softwareprotokolle in den Schnittstellen (l1, l2) hinterlegt werden und/oder über die Schnittstellen (l1, l2) das zweite Gerät der Unterhaltungselektronik (P1) vom ersten Gerät der Unterhaltungselektronik (TV) oder das erste Gerät der Unterhaltungselektronik (TV) vom zweiten Gerät der Unterhaltungselektronik (P1) gesteuert wird und/oder das zweite Gerät der Unterhaltungselektronik (P1) über die Schnittstellen (I1, I2) vom ersten Gerät der Unterhaltungselektronik (TV) mit Energie versorgt wird und/oder in Abhängigkeit des Verhaltens des zweiten Geräts der Unterhaltungselektronik (P1) die internen Prozesse des ersten Geräts der Unterhaltungselektronik (TV) angepasst werden.

6. Verfahren nach einem oder mehreren der vorangehenden Ansprüche,
**dadurch gekennzeichnet, dass**
zur Grundinitialisierung ein Skript ausgetauscht wird, mittels dessen Befehle, Menüs und Kommandos definiert werden.

7. Verfahren nach einem oder mehreren der vorangehenden Ansprüche,
**dadurch gekennzeichnet, dass**
ein Master für alle zusammengeschalteten Geräte der Unterhaltungselektronik (TV, P1) festgelegt wird und dasjenige Gerät der Unterhaltungselektronik (TV, P1) als Master eingesetzt wird, welches eine Anzeigevorrichtung aufweist oder das Gerät der Unterhaltungselektronik (TV, P1) als Master gesetzt wird, das den neueren Softwarestand für die Schnittstelle (I1, I2) aufweist.

8. Verfahren nach einem oder mehreren der vorangehenden Ansprüche,
**dadurch gekennzeichnet, dass**
die Weiterleitung von Befehlen wie auch die Statusmitteilungen mittels Telegrammen vorgenommen werden.

9. Verfahren nach einem oder mehreren der vorangehenden Ansprüche,
**dadurch gekennzeichnet, dass**
in Abhängigkeit des Status des zweiten Geräts der Unterhaltungselektronik (P1) dieses vom ersten Gerät der Unterhaltungselektronik (TV) angesteuert wird und das zweite Gerät der Unterhaltungselektronik (P1) vom ersten Gerät der Unterhaltungselektronik (TV) vom Betriebsmodus in den Stand-by-Modus oder aus dem Stand-by-Modus in den Betriebsmodus bringbar ist oder das zweite Gerät der Unterhaltungselektronik (P1) vom ersten Gerät der Unterhaltungselektronik (TV) von der Netzspannung trennbar gestaltet ist.

10. Verfahren nach einem oder mehreren der vorangehenden Ansprüche,
**dadurch gekennzeichnet, dass**
in einem Speicher in jedem der Geräte der Unterhaltungselektronik (TV, P1) Informationen über die Befehlssätze und/oder die Historie einer Verbindung zwischen den Geräten der Unterhaltungselektronik (TV, P1) gespeichert werden.

11. Verfahren nach einem oder mehreren der vorangehenden Ansprüche,
**dadurch gekennzeichnet, dass**
das On-Screen-Display des ersten Geräts der Unterhaltungselektronik (TV) dynamisch an den Funktionalitätsumfang des zweiten Geräts der Unterhaltungselektronik (P1) angepasst wird.

12. System bestehend aus Geräten der Unterhaltungselektronik (TV, P1) mit einer extern zugänglichen Schnittstelle (l1, l2) nach einem oder mehreren der vorangehenden Ansprüche, wobei das erste Gerät der Unterhaltungselektronik (TV) mit dem zweiten Gerät der Unterhaltungselektronik (P1) über die extern zugänglichen Schnittstellen (l1, I2) zusammenschaltbar ist, wobei bei der Inbetriebnahme bzw. dem Anschluss der beiden Geräte der Unterhaltungselektronik (TV, P1) über die Schnittstellen (l1, l2) ein Handshake zwischen den beiden zusammengeschalteten Geräten der Unterhaltungselektronik (TV, P1) erfolgt und beide Geräte der Unterhaltungselektronik (TV, P1) ihre Befehlssätze austauschen und für die weitere Kommunikation einen neuen gemeinsamen Befehlssatz definieren, der unter Vermeidung von Dubletten die Befehlssätze der bei beiden zusammengeschalteten Geräten der Unterhaltungselektronik (TV, P1) beinhaltet und jedem Befehl ein Gerät der Unterhaltungselektronik (TV, P1) zur Ausführung zuweist, wobei Eingaben eines Benutzers an einer Bedieneinheit an einem der Geräte der Unterhaltungselektronik (TV, P1) decodiert und entweder dieses Gerät der Unterhaltungselektronik (TV, P1) diese Eingaben ausführt oder an das Gerät der Unterhaltungselektronik (TV, P1) leitet, das diesem Befehl zugewiesen ist.

13. System nach Anspruch 12,
**dadurch gekennzeichnet, dass**
die zusammengeschalteten Geräte der Unterhaltungselektronik (TV, P1) kontinuierlich ihren Status untereinander austauschen.

14. System nach Anspruch 12 oder 13,
**dadurch gekennzeichnet, dass**
das die Schnittstelle (I2) des zweiten Gerätes der Unterhaltungselektronik (P1) direkt in die Schnittstelle (I1) des ersten Geräts der Unterhaltungselektronik (TV) einführbar ist.

15. System nach einem der vorangehenden Ansprüche 12 bis 14,
**dadurch gekennzeichnet, dass**
ein Softwareprotokoll für die Schnittstellen (l1, l2) hinterlegt ist, welches das Gerät der Unterhaltungselektronik (T1, P1) aktiviert sobald es eine Belegung der Schnittstelle (l1, l2) durch ein anderes Gerät der Unterhaltungselektronik erkennt.

16. System nach einem der vorangehenden Ansprüche 12 bis 15,
**dadurch gekennzeichnet, dass**
das erste Gerät der Unterhaltungselektronik (TV) über die Schnittstellen (11, I2) das zweite Gerät der Unterhaltungselektronik (P1) steuert und/oder das erste Gerät der Unterhaltungselektronik (TV) das zweite Gerät der Unterhaltungselektronik (P1) über die Schnittstellen (l1, l2) mit Energie versorgt und/oder das erste Gerät der Unterhaltungselektronik (TV) in Abhängigkeit des Verhaltes des zweiten Geräts der Unterhaltungselektronik (P1) seine internen Prozesse angepasst.

17. System nach einem der vorangehenden Ansprüche 12 bis 16,
**dadurch gekennzeichnet, dass**
bei der Grundinitialisierung das erste Gerät der Unterhaltungselektronik (TV) mit dem zweiten Gerät der Unterhaltungselektronik (P1) ein Skript austauscht, mittels dessen Menüs und Kommandos definiert werden.

18. System nach einem der vorangehenden Ansprüche 12 bis 17,
**dadurch gekennzeichnet, dass**
das Gerät der Unterhaltungselektronik (TV, P1) als Master gesetzt wird, das den neueren Softwarestand für die Schnittstellen (I1, I2) aufweist.

19. System nach einem der vorangehenden Ansprüche 12 bis 18,
**dadurch gekennzeichnet, dass**
das erste Gerät der Unterhaltungselektronik (TV) das zweite Gerät der Unterhaltungselektronik (P1) vom Betriebsmodus in den Stand-by-Modus oder aus dem Stand-by-Modus in den Betriebsmodus bringt oder von der Netzspannung trennt.

20. System nach einem der vorangehenden Ansprüche 12 bis 19,
**dadurch gekennzeichnet, dass**
das erste Gerät der Unterhaltungselektronik (TV) und/oder das zweite Gerät der Unterhaltungselektronik (P1) in einem Speicher Informationen über die Befehlssätze und/oder die Historie der Verbindung zwischen den Geräten der Unterhaltungselektronik (TV, P1) speichern.

21. System nach einem der vorangehenden Ansprüche 12 bis 20,
**dadurch gekennzeichnet, dass**
das erste Gerät der Unterhaltungselektronik (TV) sich selbst oder das zweite Gerät der Unterhaltungselektronik (P1) bei der Signalübertragung maximal aussteuert.

22. System nach einem der vorangehenden Ansprüche 12 bis 21,
**dadurch gekennzeichnet, dass**
das sich das On-Screen-Display des ersten Geräts der Unterhaltungselektronik (TV) dynamisch an den Funktionalitätsumfang des zweiten Geräts der Unterhaltungselektronik (P1) anpasst.
